# EUROPÄISCHE PATENTSCHRIFT

(11) **EP 1 432 938 B1**
(45) Veröffentlichungstag und Bekanntmachung des Hinweises auf die Patenterteilung: **08.06.2005**
(21) Anmeldenummer: 02748818.8
(22) Anmeldetag: 26.06.2002
(51) Int. Cl.: F16J 15/32

(54) **RADIALWELLENDICHTUNG UND VERFAHREN ZU IHRER HERSTELLUNG**
RADIAL SHAFT SEAL AND METHOD FOR MAKING SAME
JOINT RADIAL D'ARBRE ET SON PROCEDE DE PRODUCTION

(30) Priorität: 02.10.2001 DE 10148715
(43) Veröffentlichungstag der Anmeldung: 30.06.2004
(73) Patentinhaber: Carl Freudenberg KG, 69469 Weinheim (DE)
(72) Erfinder: KLENK, Thomas, 69214 Eppelheim (DE); LIEDTKE, Ulrich, 69514 Laudenbach (DE); SCHULTZ, Frank, 68163 Mannheim (DE); BOCK, Eberhard, 69509 Mörlenbach (DE); WETZEL, Stephan, 71287 Weissach-Flacht (DE)
(86) Internationale Anmeldenummer: PCT/EP2002/007035
(87) Internationale Veröffentlichungsnummer: WO 2003/031851

(56) Entgegenhaltungen:
- EP-A- 0 188 140
- EP-A- 0 281 452
- EP-A- 0 695 899
- WO-A-87/03515
- DE-A- 2 444 502
- GB-A- 796 610
- US-A- 3 698 727
- US-A- 3 968 069
- US-A- 4 042 747
- US-A- 4 194 748
- US-A- 5 219 910
- US-B1- 6 199 869
- PATENT ABSTRACTS OF JAPAN vol. 015, no. 001 (C-0793), 7. Januar 1991 (1991-01-07) & JP 02 255786 A (NIPPON VALQUA IND LTD), 16. Oktober 1990 (1990-10-16)

## Beschreibung

### Technisches Gebiet

Zur Abdichtung einer drehbaren Welle gegenüber einem feststehenden Gehäuse sind eine Vielzahl von Dichtungen bekannt. Häufig verwendet werden sogenannte Lippendichtungen, bei denen ein lippenförmig ausgebildetes Dichtelement aus einem Elastomer die Welle dichtend umfasst. Bei aggressiven Medien gelangen auch Dichtlippen zum Einsatz, die aus einem PTFE-Werkstoff hergestellt sind. Ergänzend zu den Dichtungen werden häufig luftseitig Schmutzschürzen eingesetzt, die aus einer einfachen Scheibe aus Filz bestehen. Sofern die Schmutzschürzen bis an die Welle herangeführt sind, übernehmen sie zusätzlich noch eine abdichtende Funktion. Das hat allerdings zur Folge, dass eine deutliche Steigerung des vom Gesamtsystem erzeugten Reibmoments auftritt.

Zur Reduzierung des Reibmoments des Dichtsystems wird der Zwischenraum zwischen der Dichtlippe und der Schmutzschürze oft mit einer Fettfüllung versehen.

Dichtlippen aus PTFE haben generell geringere Reibkräfte. insofern ist ihr Einsatz bei gewollter Reduzierung der Reibkräfte günstig. Nachteilig wirkt sich jedoch die Kriechneigung von PTFE aus insbesondere bei hohen Temperaturen, die zu Vorspannungsveriusten und damit zu Leckagen führen kann. Aus diesem Grunde wird reines PTFE nur selten als Dichtlippenwerkstoff bei Wellendichtungen verwendet. Zum Einsatz gelangen aufwendige Kompoundierungen, aus denen in kostenintensiven Sintervorgängen und mechanischen Bearbeitungschritten formstabile Dichtlippen hergestellt werden. Ein derartiges Material ist beispielsweise aus dem Dokument US-A-4 042 747 bekannt.

### Darstellung der Erfindung

Der Erfindung liegt die Aufgabe zugrunde eine Radialwellendichtung zu schaffen, die gute Dichteigenschaften, insbesondere im Langzeiteinsatz hat, die möglichst geringe Reibungskräfte erzeugt und die außerdem wirtschaftlich hergestellt werden kann.

Die Lösung der gestellten Aufgabe erfolgt bei einer Radialwellendichtung mit einem Dichtelement aus einem mit einem Wirkstoff, insbesondere PTFE, getränkten Vliesstoff zwischen einem feststehenden Maschinenteil und einer sich drehenden Welle erfindungsgemäß dadurch, dass das Dichtelement in axialer Richtung aus wenigstens einer unter Druck und Temperatur laminierten mit PTFE-Dispersion (incl. Füllstoffen) imprägnierten Vliesstofflage besteht. In Versuchen zeigte sich, dass ein Dichtelement mit besonders geringen Reibkräften durch einen gezielt an die Betriebsbedingungen/Medium, Wellenverlagerung angepassten Laminiervorgang (Druck und Temperatur) der Vliesstoffbahn oder -bahnen erreicht werden kann, da die Dichtlippe bei geringem Laminierdruck und -temperatur flexibel bleibt und so gut Wellenverlagerung nachfolgen kann sowie sich der Wellenoberfläche gut anpasst, bei hohem Laminierdruck und -temperatur jedoch eine machanisch sehr stabile und besonders öldichte Dichtlippe erzeugt wird. Dies kann auch durch die Laminierung von mit jeweils unterschiedlichen PTFE-Dispersionen und Füllstoffen imprägnierten Vliesen erzielt werden. Die Anzahl der Vliesstofflagen kann beliebig variiert werden.

Der eingesetzte Vliesstoff wird vorzugsweise mit einer wässrigen PTFE-Dispersion imprägniert. Diese Dispersion kann auch anorganische Füllstoffe enthalten. Besonders gute Ergebnisse werden erreicht, wenn die PTFE-Dispersion bis zu 50 Gew.% Graphit, Talkum, Glimmer oder Molybdändisulfid bezogen auf die Trockenmasse an PTFE als organischen Füllstoff enthält.

Als Vliesstoff wird vorzugsweise ein mechanisch gebundener Vliesstoff verwendet. Die mechanische Bindung des Vliesstoffs kann beispielsweise durch Wasserstrahlverfestigung oder Nadeln erfolgen. Dieses führt zu einer guten mechanischen Stützwirkung sowie Offenheit und Porosität. Außerdem kann der Vliesstoff aus Fasern oder aus Fasermischungen aus Polyamid, Polybenzinidazol, Polyester, Glasfasern, Aramidfasern, Polyacrylfasern oder Basaltfasern hergestellt sein. Die Länge der Fasern beträgt 2 - 100 mm insbesondere 3 - 20 mm bei einem Flächengewicht von 20 bis 500 g/m². Die relativ kurze Faserlänge erlaubt eine starke Porosität, was für die spätere Imprägnierung von Vorteil ist.

Zur Erzielung einer öldichten Dichtlippe ist nach dem Imprägniervorgang eine gezielte Verdichtung und Verklebung der lose in der Vliesmatrix verankerten PTFE-Flocken notwendig.

Hierzu wird die PTFE-Vlies-Dichtungsbahn in einem weiteren Fertigungsschritt in einem kontinuierlichen Walz- bzw. Laminiervorgang mit Hilfe umlaufender beheizter Stahlwalzen einer Temperatur- und Druckbehandlung unterworfen, was auf der einen Seite zu einer deutlichen Verdichtung der PTFE-Vliesbahn (gut öldicht) und gleichzeitig, aufgrund der Streichwirkung der Walzen, zu einer deutlichen Oberflächenglättung führt, wodurch ein verbessertes Reibverhalten, geringere Verschmutzungsanfälligkeit, sowie keine Einlagerung von Staub- und Schmutzpartikeln von außen bzw. von Ölkohlepartikeln von innen in die Dichtlippe möglich ist.

Die Dichtelemente selbst werden durch Ausstanzen aus den laminierten Vliesstoffbahnen hergestellt. Für die Vervollständigung zur Radialwellendichtung werden sie mit an sich bekannten Befestigungselementen verbunden, die in entsprechende Gehäuseöffnungen eingesetzt werden. Hierfür ist das Dichtelement aus einer Ringscheibe mit einem Befestigungskranz und einer, die Dichtfläche bildenden Abdichtnabe ausgestattet. Dabei wird die Abdichtnabe, die an der Welle anliegt, so ausgebildet, dass sie eine gewisse Überdeckung hat. Diese Überdeckung bewirkt, dass die an der Welle anliegende Abdichtnabe beim Aufziehen auf die Welle leicht umgewinkelt wird. Bei einer größeren Überdeckung kann es zweckmäßig sein, dass die Abdichtnabe durch eine Wendelfeder an die Welle angedrückt wird. Zum Schutz der Wendelfeder vor Partikeleinlagerungen kann diese auch vollständig von einer besonders flexiblen Vliesstoffbahn umhüllt sein.

Die Dichtelemente können auch als Staubschutz ausgebildet sein. Durch den geringen Reibkoeffizienten des neuen Dichtelements kann der Staubschutz auch mit seiner Innenkante an der Welle anliegen, ohne dass dadurch ein ungewollt hohes Reibmoment entsteht. Das Verfahren zur Herstellung der Radialwellendichtung mit einem Dichtelement aus einem mit einem Wirkstoff, insbesondere PTFE, getränkten Vliesstoff und zwischen einem feststehenden Maschinenteil und einer sich drehenden Welle zeichnet sich dadurch aus, dass mechanisch gebundene Vliesstoffbahnen aus Fasern mit einer Faserlänge von 3 - 100 mm insbesondere von 3 bis 20 mm mit einer wässrigen PTFE Dispersion imprägniert, anschließend getrocknet und sodann in vorgegebener Anzahl unter Anwendung von Wärme und Druck einzeln oder miteinander laminiert werden. Es ist günstig, wenn die Vliesstoffbahnen nach ihrer Imprägnierung durch Abquetschwalzen hindurchgeführt werden.

Die verwendeten Vliestoffbahnen haben eine Dicke von unter 2,5 mm vorzugsweise von 0,5 bis 1,25 mm. Die Trocknung der imprägnierten Vliesstoffbahnen kann in einem Durchlaufofen mit einer Temperatur von 30 bis 300 °C erfolgen.

Bei der Laminierung der Vliesstoffbahnen wird eine Verdichtung der Bahnen von 10 bis 75 % der Ausgangsdicke erreicht.

Die Dichtelemente können in gewünschter Größe und Gestalt aus den laminierten Vliesstoffbahnen ausgestanzt werden. Die dann vorliegenden Dichtelemente werden einer Sinterbehandlung bei erhöhter Temperatur und erhöhtem Druck unterzogen.

In besonderen Fällen kann das Dichtelement im Bereich seiner Dichtflächen einer weiteren gesonderten Nachbehandlung unterworfen werden und eine verschleißfestere und/oder höher verdichtete Schicht erzeugt werden. Diese Nachbehandlung kann auch aus partiellem Prägen und/oder Nachsintem von Kanälen zur Erzeugung von hydrodynamischen Fördereinrichtungen bestehen.

In einem weiteren besonderen Fall kann eine hydrodynamisch förderaktive Struktur erzeugt werden, indem das Dichtelement über einen Dom mit rauher Oberfläche gezogen wird. Dadurch werden in der zukünftigen Kontaktzone zur Welle Fasern teilweise aus dem Vlies-PTFE-Verbund herausgezogen. Diese Fasern richten sich mit ihrem herausgezogenen Anteil, abhängig von der Wellendrehrichtung aus, und bewirken, dass das in den Dichtspalt eingedrungene abzudichtende Medium in den abzudichtenden Raum zurückgefördert wird. Die Fasern wirken dadurch als von der Wellendrehrichtung unabhängige Rückförderelemente (Drallelemente).

### Kurzbeschreibung der Zeichnungen

Anhand der in der Zeichnung dargestellten Ausführungsbeispiele wird die Erfindung nachstehend näher erläutert.

Es zeigt:
- Fig. 1: eine Radialwellendichtung im Schnitt mit einem Dichtelement und einer Schmutzschürze,
- Fig. 2: einen Radialwellendichtring im Schnitt mit einem Dichtelement mit umgebogener Abdichtnabe,
- Fig. 3: eine Radiatwellendichtung im Schnitt mit einer nachbehandelten Abdichtnabe mit höherer Verschleißfestigkeit und rückfördemden Kanälen,
- Fig. 4: eine Radialwellendichtung im Schnitt mit zwei hintereinander angeordneten Dichtelementen, die durch ein Element beabstandet werden, das zur Welle hin einen Fettsaum schafft,
- Fig. 5: die Draufsicht auf die Dichtfläche eines Dichtelements mit teilweise aus dem Vlies-PTFE-Verbund herausgezogenen, förderaktiven Fasern.

### Ausführung der Erfindung

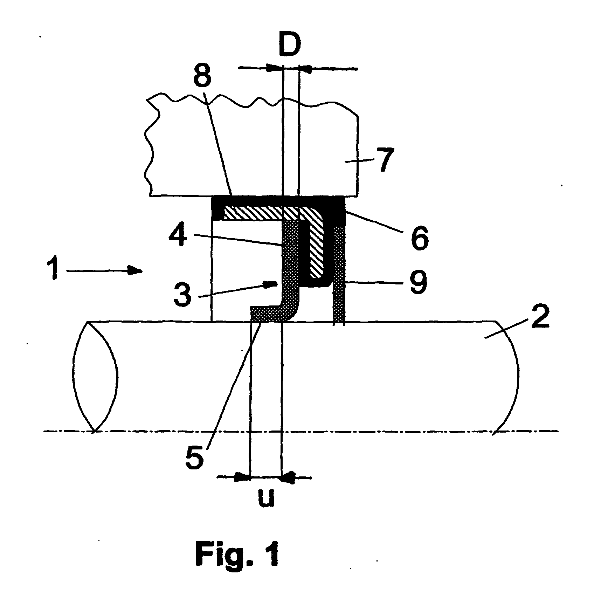

Die in der Fig. 1 gezeigte Radialwellendichtung 1 ist mit dem an der Welle 2 anliegenden Dichtelement 3 versehen, das aus wenigstens einer oder unter Druck und Temperatur laminierten mit PTFE-Dispersion imprägnierten Vliesstofflagen besteht. Das Dichtelement 3 ist eine Ringscheibe und hat einen Befestigungskranz 4 und eine die Dichtfläche bildende Abdichtnabe 5. Mit dem Befestigungskranz 4 ist das Dichtelement 3 über ein Elastomer 6 im Gehäuse 7 befestigt. In das Elastomer 6 ist ein aus Metall bestehender Versteifungsring 8 eingefügt. Auf der Außenseite der Radialwellendichtung 1 ist am Elastomer 6 noch die Schmutzschürze 9 angebracht. Eine so ausgebildete Radialwellendichtung hat einen äußerst geringen Reibkoeffizienten obwohl die Überdeckung U, welche durch die Abdichtnabe 5 gegeben ist, etwa das doppelte der Dicke D des Dichtelements 3 beträgt und außerdem die Schmutzschürze 9 an der Welle 2 anliegt. Die Schmutzschürze 9 ist ebenso wie das Dichtelement 3 aus einer oder mehreren zusammengepressten Vliesstofflagen gebildet. Die Abdichtnabe 5 ist durch Umlegen der inneren Ringscheibe hergestellt.

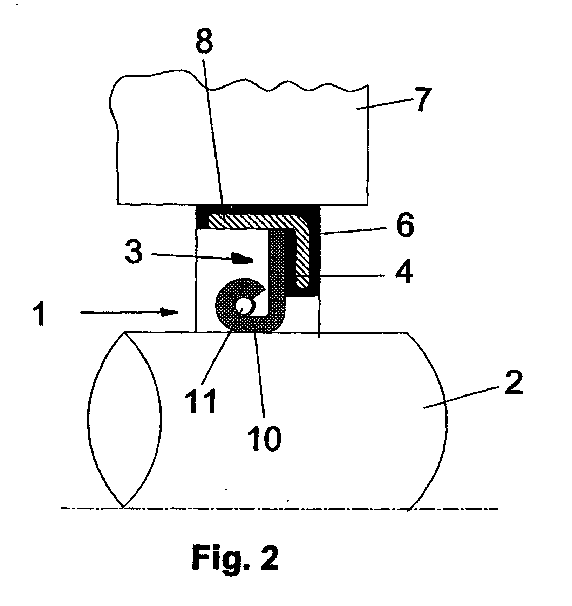

In der Fig. 2 ist eine Radialwellendichtung 1 gezeigt, bei der das Dichtelement 3 eine Abdichtnabe 10 hat, die durch eine Wendelfeder 11 an die Welle 2 gedrückt wird und die die Wendelfeder 11 um mehr als 180 ° einfasst. Eine solche Radialwellendichtung eignet sich besonders für den Langzeiteinsatz. Der Befestigungskranz 4 des Dichtelements 3 ist über das Elastomer 6 und die darin befindliche Metallverstärkung in das Gehäuse 7 eingesetzt.

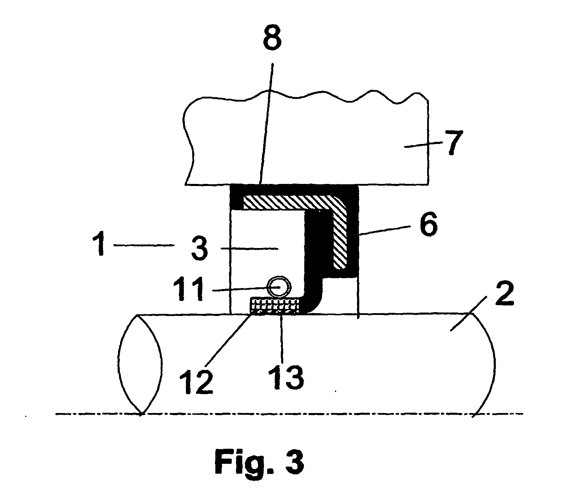

Die Fig. 3 zeigt eine Ausführungsform einer Radialwellendichtung 1 bei der die Abdichtnabe 12 auf ihrer Dichtfläche 13 Kanäle oder Ausnehmungen besitzt, die eine Rückförderung des abzudichtenden Mediums in den abzudichtenden Raum bewirkt. Diese Kanäle sind durch ein partielles Prägen unter Temperatur und Druck in das Dichtelement 3 eingebracht worden. Es ist günstig, hier ebenfalls eine Wendelfeder 11 zu verwenden. Die Befestigung des Dichtelements 3 an der aus dem Elastomer 6 und dem Verstärkungsring 8 bestehenden Halterung erfolgt im Gehäuse 7 auf die gleiche Weise wie in Fig. 2 .

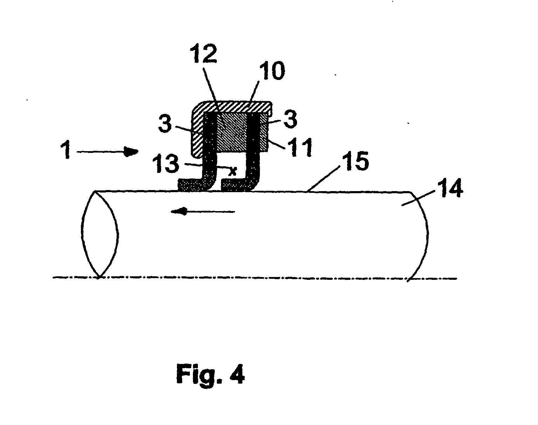

Fig. 4 zeigt einen Radialwellendichtring 1 mit zwei hintereinander angeordneten Dichtelementen 3 im letzten Fertigungsschritt. Die beiden Dichtelemente sind durch einen Abstandsring 12 voneinander getrennt. Der Abstandsring 12 berandet zur Welle hin einen Raum 13, der mit Fett gefüllt werden kann. Das Fett bildet eine Barriere für von außen eintretenden Schmutz und schmiert die Dichtelemente 3.

Das äußere Dichtelement wird von einer Scheibe 11 gehalten, die von dem Metallgehäuse 10 eingebördelt ist. Der letzte dargestellte Fertigungsschritt besteht darin, dass ein Dom 14 in der durch den Pfeil gekennzeichneten Richtung durch den Radialwellendichtring 1 hindurchgezogen wird. Der Dom 14 hat eine rauhe Oberfläche 15, die in der Lage ist, Fasern teilweise aus dem Vlies-PTFE-Verbund herauszuziehen. In dem dargestellten Fall hat der Dom 14 einen geringfügig kleineren Durchmesser als die abzudichtende Welle. Dadurch werden nur in dem der Ölseite zugewandten Bereich der Kontaktfläche förderaktive Fasern erzeugt.

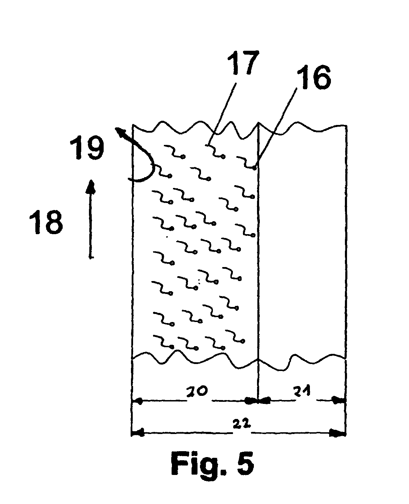

Fig. 5 zeigt die Draufsicht auf die Dichtfläche 22 des Radialwellendichtrings aus Fig. 4. Im zur Ölseite zugewandten Bereich 20 sind Fasern 17 teilweise so aus dem Vlies-PTFE-Verbund herausgezogen, dass sie mit einem Ende 16 noch verankert sind.

Abhängig von der Relativbewegung 18 der Welle richten sich die Fasern 17 aus. Dadurch wird unabhängig von der Wellendrehrichtung in den Dichtspalt eingedrungene Flüssigkeit 19 in den abzudichtenden Raum zurückgefördert. Der dem abzudichtenden Raum abgewandte Bereich 21 der Dichtfläche 22 weist keine herausgezogene Fasern auf sondern bleibt glatt.

### Beispiel:

Für die Herstellung der Radialwellendichtung werden Vliesstoffbahnen aus Fasern mit einer Faserlänge von 8 ― 15 mm gebildet mit einer Dicke von 1,0 mm. Die Vliesstoffbahnen werden mit einer wässrigen PTFE-Lotion getränkt und danach durch Abquetschwalzen hindurchgeführt. Sodann werden sie in einem Durchlaufofen bei einer Temperatur von 260°C getrocknet und in einer Anpresseinrichtung miteinander laminiert. Aus dem entstandenen Laminat werden ringförmige Dichtelemente ausgestanzt und in eine Radialwellendichtung eingefügt. Die Radialwellendichtung wird auf eine Welle aufgeschoben, deren Durchmesser geringfügig größer ist als der Innendurchmesser der Dichtelementöffnung. Dadurch wird eine geringfügige Umbiegung des Dichtelementrandes erreicht, so dass die erzielte Überdeckung ca. 1,5 mm beträgt. Das Verhalten der Dichtung bezüglich der Reibung und Dichtheit war überraschend gut.

## Patentansprüche

1. Radialwellendichtung mit einem Dichtelement aus einem mit einem Wirkstoff, insbesondere PTFE, getränkten Vliesstoff zwischen einem feststehenden Maschinenteil und einer sich drehenden Welle, **dadurch gekennzeichnet, dass** das Dichtelement (3) in axialer Richtung aus wenigstens einer unter Druck und Temperatur laminierten mit PTFE-Dispersion imprägnierten Vliesstofflage besteht.

2. Radialwellendichtung nach Anspruch 1, **dadurch gekennzeichnet, dass** die Vliesstofflagen mit einer wässrigen PTFE-Dispersion imprägniert sind.

3. Radialwellendichtung nach Anspruch 2, **dadurch gekennzeichnet, dass** die PTFE-Dispersion anorganische Füllstoffe enthält.

4. Radialwellendichtung nach Anspruch 2 oder 3, **dadurch gekennzeichnet, dass** die PTFE-Dispersion bis zu 50 Gew.% Graphit, Talkum, Glimmer oder Molybdändisulfid, bezogen auf die Trockenmasse an PTFE als anorganischen Füllstoff, enthält.

5. Radialwellendichtung nach einem der Ansprüche 1 bis 4, **dadurch gekennzeichnet, dass** die Vliesstofflagen aus mechanisch gebundenem Vliesstoff mit einer Faserlänge von 3 bis 100 mm insbesondere von 3 bis 20 mm, und einem Flächengewicht von 20 ― 500 g/m² bestehen.

6. Radialwellendichtring nach Anspruch 5, **dadurch gekennzeichnet, dass** die mechanische Bindung des Vliesstoffs durch Wasserstrahlverfestigung oder Nadelung durchgeführt ist.

7. Radialwellendichtung nach einem der Ansprüche 1 bis 6, **dadurch gekennzeichnet, dass** der Vliesstoff aus Fasern oder Fasermischungen aus Polyimid, Polybenzinidazol, Polyester, Glasfasern, Aramidfasern, Polyacryl oder Basaltfasern besteht.

8. Radialwellendichtung nach einem der Ansprüche 1 bis 7, **dadurch gekennzeichnet, dass** das Dichtelement (3) aus einer Ringscheibe mit einem Befestigungskranz und einer die Dichtfläche bildenden Abdichtnabe (5) besteht und dass die Abdichtnabe (5) an der Welle (2) eine Überdeckung (U) von mindestens 1 mm vorzugsweise 2 mm hat.

9. Radialwellendichtung nach einem der Ansprüche 1 bis 8, **dadurch gekennzeichnet, dass** die Abdichtnabe (5) durch Umlegen der inneren Ringscheibe gebildet ist.

10. Radialwellendichtung nach einem der Ansprüche 1 bis 9, **dadurch gekennzeichnet, dass** die Abdichtnabe (5) durch eine Wendelfeder (11) an die Welle (2) gedrückt wird.

11. Radialwellendichtung nach einem der Ansprüche 1 bis 10, **dadurch gekennzeichnet, dass** das Dichtelement (2) als Staubschutz (9) ausgebildet ist.

12. Radialwellendichtung nach einem der Ansprüche 1 bis 11, **dadurch gekennzeichnet, dass** der Staubschutz (9) mit seiner Innenkannte an der Welle (2) anliegt.

13. Verfahren zur Herstellung einer Radialwellendichtung mit einem Dichtelement aus einem, mit einem Wirkstoff, insbesondere PTFE, getränkten Vliesstoff zwischen einem feststehenden Maschinenteil und einer sich drehenden Welle, **dadurch gekennzeichnet, dass** mechanisch gebundene Vliesstoffbahnen aus Fasern mit einer Faserlänge von 3 bis 100 mm insbesondere von 3 bis 20 mm mit einer wässrigen PTFE-Dispersion imprägniert, anschließend getrocknet und sodann in vorgegebener Anzahl (eine oder mehrere) unter Anwendung von Wärme und Druck laminiert werden.

14. Verfahren nach Anspruch 13, **dadurch gekennzeichnet, dass** die Vliesstoffbahnen nach ihrer Imprägnierung durch Abquetschwalzen hindurchgeführt werden.

15. Verfahren nach Anspruch 13 oder 14, **dadurch gekennzeichnet, dass** die verwendeten Vliesstoffbahnen eine Dicke von unter 2,5 mm vorzugsweise von 0,5 bis 1,25 mm haben.

16. Verfahren nach einem der Ansprüche 13 bis 15, **dadurch gekennzeichnet, dass** die Trocknung der imprägnierten Vliesstoffbahnen in Durchlaufofen bei einer Temperatur von 30 bis 300 °C erfolgt.

17. Verfahren nach einem der Ansprüche 13 bis 16, **dadurch gekennzeichnet, dass** bei der Laminierung der Vliesstoffbahnen eine Verdichtung der einzelnen Bahnen um 10 bis 75 % deren Ausgangsdicke eintritt.

18. Verfahren nach einem der Ansprüche 13 bis 17, **dadurch gekennzeichnet, dass** die Dichtelemente in gewünschter Größe und Gestalt aus der laminierten Vliesstoffbahn ausgestanzt werden.

19. Verfahren nach einem der Ansprüche 13 bis 18, **dadurch gekennzeichnet, dass** das verpresste Dichtelement (3) einer Sinterbehandlung bei erhöhter Temperatur und erhöhtem Druck unterzogen wird.

20. Verfahren nach einem der Ansprüche 13 bis 19, **dadurch gekennzeichnet, dass** das Dichtelement (3) im Bereich seiner Dichtflächen einer gesonderten Nachbehandlung unterworfen wird und eine verschleißfestere und/oder höher verdichtete Schicht hat.

21. Verfahren nach einem der Ansprüche 13 bis 20, **dadurch gekennzeichnet, dass** die Nachbehandlung aus partiellem Prägen und/oder Nachsintem besteht

22. Verfahren nach einem der Ansprüche 13 bis 21, **dadurch gekennzeichnet, dass** der Radialwellendichtring im fertigen Zustand über einen rauhen Dorn gezogen wird.

23. Verfahren nach einem der Ansprüche 13 bis 21, **dadurch gekennzeichnet, dass** der dorn einen kleineren Durchmesser hat als die mit den Radialwellendichtring abzudichtende Welle.

## Claims

1. Radial shaft seal with a sealing element of a nonwoven fabric impregnated with an active substance, in particular PTFE, between a stationary machine part and a rotating shaft, **characterized in that** the sealing element (3) comprises in the axial direction at least one layer of nonwoven fabric impregnated with a PTFE dispersion, laminated at a certain pressure and a certain temperature.

2. Radial shaft seal according to Claim 1, **characterized in that** the layers of nonwoven fabric are impregnated with an aqueous PTFE dispersion.

3. Radial shaft seal according to Claim 2, **characterized in that** the PTFE dispersion contains inorganic fillers.

4. Radial shaft seal according to Claim 2 or 3, **characterized in that** the PTFE dispersion contains up to 50% by weight of graphite, talc, mica or molybdenum disulphide, with respect to the dry mass of PTFE, as inorganic filler.

5. Radial shaft seal according to one of Claims 1 to 4, **characterized in that** the layers of nonwoven fabric consist of mechanically bonded nonwoven material with a fibre length of 3 to 100 mm, in particular of 3 to 20 mm, and a weight per unit area of 20-500 g/m².

6. Radial shaft seal according to Claim 5, **characterized in that** the mechanical bonding of the nonwoven material is carried out by hydroentanglement or needle punching.

7. Radial shaft seal according to one of Claims 1 to 6, **characterized in that** the nonwoven fabric consists of fibres or fibre blends of polyimide, polybenzimide azol, polyester, glass fibres, aramid fibres, polyacryl or basalt fibres.

8. Radial shaft seal according to one of Claims 1 to 7, **characterized in that** the sealing element (3) comprises an annular disc with a fastening rim and a sealing hub (5), forming the sealing surface, and **in that** the sealing hub (5) has at the shaft (2) an overlap (U) of at least 1 mm, preferably 2 mm.

9. Radial shaft seal according to one of Claims 1 to 8, **characterized in that** the sealing hub (5) is formed by folding over of the inner annular disc.

10. Radial shaft seal according to one of Claims 1 to 9, **characterized in that** the sealing hub (5) is pressed onto the shaft (2) by a helical spring (11).

11. Radial shaft seal according to one of Claims 1 to 10, **characterized in that** the sealing element (2) is formed as a dust guard (9).

12. Radial shaft seal according to one of Claims 1 to 11, **characterized in that** the dust guard (9) bears with its inner edge against the shaft (2).

13. Method for making a radial shaft seal with a sealing element comprising a nonwoven fabric impregnated with an active substance, in particular PTFE, between a stationary machine part and a rotating shaft, **characterized in that** mechanically bonded nonwoven fabric webs comprising fibres with a fibre length of 3 to 100 mm, in particular of 3 to 20 mm, are impregnated with an aqueous PTFE dispersion, subsequently dried and then laminated in a predetermined number (one or more) while heat and pressure are applied.

14. Method according to Claim 13, **characterized in that** the nonwoven fabric webs are passed through squeezing rollers after their impregnation.

15. Method according to Claim 13 or 14, **characterized in that** the nonwoven fabric webs used have a thickness of less than 2.5 mm, preferably of 0.5 to 1.25 mm.

16. Method according to one of Claims 13 to 15, **characterized in that** the drying of the impregnated nonwoven fabric webs is performed in tunnel ovens at a temperature of 30 to 300°C.

17. Method according to one of Claims 13 to 16, **characterized in that**, during the lamination of the nonwoven fabric webs, a compaction of the individual webs by 10 to 75% of their initial thickness occurs.

18. Method according to one of Claims 13 to 17, **characterized in that** the sealing elements are punched out from the laminated nonwoven fabric web in the desired size and shape.

19. Method according to one of Claims 13 to 18, **characterized in that** the pressed sealing element (3) is subjected to a sintering treatment at elevated temperature and elevated pressure.

20. Method according to one of Claims 13 to 19, **characterized in that** the sealing element (3) is subjected in the region of its sealing surfaces to a separate aftertreatment and has a more wear-resistant and/or highly compacted layer.

21. Method according to one of Claims 13 to 20, **characterized in that** the aftertreatment comprises partial stamping and/or resintering.

22. Method according to one of Claims 13 to 21, **characterized in that**, in the finished state, the radial shaft sealing ring is pulled over a rough mandrel.

23. Method according to one of Claims 13 to 21, **characterized in that** the mandrel has a smaller diameter than the shaft to be sealed with the radial shaft sealing ring.

## Revendications

1. Joint radial d'arbre avec un élément d'étanchéité en une étoffe non tissée imprégnée d'une substance active, en particulier de PTFE, entre une pièce de machine fixe et un arbre tournant, **caractérisé en ce que** l'élément d'étanchéité (3) se compose, en direction axiale, d'au moins une couche d'étoffe non tissée imprégnée d'une dispersion de PTFE et laminée sous pression et température.

2. Joint radial d'arbre selon la revendication 1, **caractérisé en ce que** les couches d'étoffe non tissée sont imprégnées avec une dispersion aqueuse de PTFE.

3. Joint radial d'arbre selon la revendication 2, **caractérisé en ce que** la dispersion de PTFE contient des matières de charge minérales.

4. Joint radial d'arbre selon la revendication 2 ou 3, **caractérisé en ce que** la dispersion de PTFE contient jusque 50% en poids de graphite, de talc, de mica ou de bisulfure de molybdène, rapportés à la masse sèche de PTFE, comme matière de charge minérale.

5. Joint radial d'arbre selon l'une quelconque des revendications 1 à 4, **caractérisé en ce que** les couches d'étoffe non tissée se composent d'étoffe non tissée liée mécaniquement avec une longueur de fibres de 3 à 100 mm, en particulier de 3 à 20 mm, et un grammage de 20 - 500 g/m².

6. Joint radial d'arbre selon la revendication 5, **caractérisé en ce que** la liaison mécanique de l'étoffe non tissée est réalisée par consolidation au jet d'eau ou par aiguilletage.

7. Joint radial d'arbre selon l'une quelconque des revendications 1 à 6, **caractérisé en ce que** l'étoffe non tissée se compose de fibres ou de mélanges de fibres de polyimide, polybenzinidazol, polyester, fibres de verre, fibres d'aramide, fibres polyacryliques ou de basalte.

8. Joint radial d'arbre selon l'une quelconque des revendications 1 à 7, **caractérisé en ce que** l'élément d'étanchéité (3) se compose d'une rondelle annulaire avec une couronne de fixation et un moyeu d'étanchéité (5) formant la face d'étanchéité et **en ce que** le moyeu d'étanchéité (5) forme sur l'arbre (2) un recouvrement (U) d'au moins 1 mm, de préférence de 2 mm.

9. Joint radial d'arbre selon l'une quelconque des revendications 1 à 8, **caractérisé en ce que** le moyeu d'étanchéité (5) est formé par pliage de la rondelle annulaire intérieure.

10. Joint radial d'arbre selon l'une quelconque des revendications 1 à 9, **caractérisé en ce que** le moyeu d'étanchéité (5) est pressé sur l'arbre (2) par un ressort hélicoïdal (11).

11. Joint radial d'arbre selon l'une quelconque des revendications 1 à 10, **caractérisé en ce que** l'élément d'étanchéité (3) forme une protection contre les poussières (9).

12. Joint radial d'arbre selon l'une quelconque des revendications 1 à 11, **caractérisé en ce que** la protection contre les poussières (9) est appliquée sur l'arbre (2) par son arête intérieure.

13. Procédé de production d'un joint radial d'arbre avec un élément d'étanchéité en une étoffe non tissée imprégnée d'une substance active, en particulier de PTFE, entre une pièce de machine fixe et un arbre tournant, **caractérisé en ce que** l'on imprègne avec une dispersion aqueuse de PTFE des bandes d'étoffe non tissée liées mécaniquement en fibres ayant une longueur de fibre de 3 à 100 mm, en particulier de 3 à 20 mm, ensuite on les sèche puis on les lamine en un nombre prédéterminé (une ou plusieurs) avec application de chaleur et de pression.

14. Procédé selon la revendication 13, **caractérisé en ce que** les bandes d'étoffe non tissée sont conduites après leur imprégnation à travers des rouleaux essoreurs.

15. Procédé selon la revendication 13 ou 14, **caractérisé en ce que** les bandes d'étoffe non tissée utilisées ont une épaisseur de moins de 2,5 mm, de préférence de 0,5 à 1,25 mm.

16. Procédé selon l'une quelconque des revendications 13 à 15, **caractérisé en ce que** le séchage des bandes d'étoffe non tissée imprégnées est effectué dans un four continu à une température de 30 à 300°C.

17. Procédé selon l'une quelconque des revendications 13 à 16, **caractérisé en ce que** le laminage des bandes d'étoffe non tissée provoque une compression des bandes individuelles de 10 à 75 % de leur épaisseur initiale.

18. Procédé selon l'une quelconque des revendications 13 à 17, **caractérisé en ce que** les éléments d'étanchéité sont découpés à la forme et à la grandeur désirée à partir de la bande d'étoffe non tissée laminée.

19. Procédé selon l'une quelconque des revendications 13 à 18, **caractérisé en ce que** l'élément d'étanchéité comprimé (3) est soumis à un traitement de frittage à une température accrue et sous une pression accrue.

20. Procédé selon l'une quelconque des revendications 13 à 19, **caractérisé en ce que** l'élément d'étanchéité (3) est soumis à un traitement postérieur séparé dans la région de ses faces d'étanchéité et présente une couche plus résistante à l'usure et/ou plus fortement comprimée.

21. Procédé selon l'une quelconque des revendications 13 à 20, **caractérisé en ce que** le traitement postérieur se compose d'un gaufrage partiel et/ou d'un frittage postérieur.

22. Procédé selon l'une quelconque des revendications 13 à 21, **caractérisé en ce que** le joint radial d'arbre à l'état terminé est étiré sur un mandrin rugueux.

23. Procédé selon l'une quelconque des revendications 13 à 21, **caractérisé en ce que** le mandrin présente un diamètre plus petit que l'arbre à rendre étanche avec le joint radial d'arbre.
